# EUROPEAN PATENT APPLICATION

(11) **EP 2 897 374 A1**
(43) Date of publication of application: **22.07.2015**
(21) Application number: 14290001.8
(22) Date of filing: 15.01.2014
(51) Int. Cl.: H04Q 11/00

(54) **Optical network element and method of operating an optical network element**

(71) Applicant: ALCATEL LUCENT, 92100 Boulogne-Billancourt (FR)
(72) Inventor: Nga, Ding Thi Thuy, 120-270 Seoul (KR); Anthapadmanabhan, Nagaraj, Murray Hill, NJ 07974-0636 (US); Walid, Anwar, Murray Hill, NJ 07974-0636 (US)
(74) Representative: DREISS Patentanwälte PartG mbB

(57) **Abstract**

The invention relates to an optical network element (100), particularly optical network unit, ONU, (100) for a passive optical network, PON, (1000), wherein said optical network element (100) is configured to operate in a primary operational state (S1) in which said optical network element (100) can exchange optical signals with at least one further optical network element (200), particularly an optical line terminal (200) of a PON (1000), wherein said optical network element (100) is configured to operate in at least one secondary operational state (S2, S3) in which an electrical power consumption of said optical network element (100) is lower as compared to said primary operational state (S1), wherein said optical network element (100) is configured to directly transit from the primary operational state (S1) to said at least one secondary operational state (S2, S3; S5, S6).

## Description

### Field of the invention

The invention relates to an optical network element, particularly optical network unit, ONU, for a passive optical network, PON, wherein said optical network element is configured to operate in a primary operational state in which said optical network element can exchange optical signals with at least one further optical network element, particularly an optical line terminal of a PON.

The invention further relates to a method of operating an optical network element.

### Background

It is an object of the present invention to provide an improved optical network element and an improved method of operating an optical network element which comprise an increased energy efficiency and operational flexibility.

### Summary

Regarding the above mentioned optical network element, this object is achieved by said optical network element being configured to operate in at least one secondary operational state in which an electrical power consumption of said optical network element is lower as compared to said primary operational state, wherein said optical network element is configured to directly transit from the primary operational state to said at least one secondary operational state. This advantageously enables an optical network element such as an ONU to directly transit from the primary operational state to said secondary operational state which offers electrical energy savings due to the reduced electrical power consumption. According to the embodiments, the expression "to directly transit from the primary operational state to said at least one secondary operational state" denotes that the optical network element does not assume any further intermediate states, but rather changes from the primary state to the secondary state. This offers instant energy savings and reduces complexity of the optical network element in contrast to conventional energy saving approaches such as e.g. an ONU power saving mechanism as defined in ITU-T G.987.3 Section 16 (October 2010), which relies on intermediate states and thus requires a larger number of different states and does not offer the high degree of energy efficiency as provided by the embodiments.

According to an embodiment said optical network element is configured to operate in a first secondary operational state in which said optical network element can deactivate an optical receiver and an optical transmitter, and in a second secondary operational state in which said optical receiver is activated and in which said optical network element can deactivate said optical transmitter, wherein said optical network element is configured to transit from the first secondary operational state to the second secondary operational state and/or vice versa without transiting to the primary operational state. When deactivating both the optical receiver and the optical transmitter, in the first secondary operational state the optical network element can achieve the biggest electrical energy savings. In the second secondary operational state, still a reduced electric power consumption as compared to the primary operational state is given since said optical transmitter may be deactivated, whereas in the primary operational state, usually both the transmitter and the receiver are activated. Advantageously, according to the embodiment, a transition between the first and second secondary operational states is also possible which helps to avoid transiting to the primary operational state and thus also contributes to reduced electrical energy consumption as well as to reduced complexity regarding the state changes of the optical network element.

Generally, the secondary operational states may be considered as "power saving" or "low power" states, because the optical network element comprises a lower electrical power consumption in these operational states as compared to the primary operational state, which may be considered as a regular operational state in which the optical network element is fully capable of transmitting and receiving, i.e. exchanging in both directions (upstream/downstream), data with another optical network element.

According to a further embodiment, said optical network element is configured to operate in a first ternary operational state, and said optical network element is configured to transit from the first secondary operational state to the second secondary operational state and/or vice versa via said first ternary operational state. The first ternary state may also be denoted as "checking state". According to a further embodiment, said optical network element is configured to provide a reduced functionality within said first ternary operational state as compared to the primary operational state in order to reduce an electrical power consumption, wherein particularly a packet processor functionality is deactivated in said first ternary operational state. Thus, when transiting between the first and second secondary operational states via said ternary operational state, a still reduced electrical energy consumption is enabled since no (not even a temporary) transition to the primary operational state is required.

According to a further embodiment, said optical network element is configured to operate in a first ternary operational state and a second ternary operational state, wherein said optical network element is configured to transit from the first secondary operational state to the second secondary operational state via said first ternary operational state, and/or wherein said optical network element is configured to transit from the second secondary operational state to the first secondary operational state via said second ternary operational state. I.e., the first and second ternary states may be considered as intermediate states which are temporarily assumed during the optical network element transiting between the first and second secondary states.

According to a further embodiment, said optical network element is configured to deactivate said optical transmitter in said first ternary operational state, whereby a further reduction of electrical energy consumption may be attained.

According to an embodiment, said optical network element is configured to receive from a further optical network element, particularly from said optical line terminal, a command which indicates that the optical network element shall transit to said at least one secondary operational state, and to transit to said at least one secondary operational state upon receipt of said command.

A further solution to the object of the present invention is given by a method as defined by claim 8. Further advantageous embodiments are given by the dependent claims.

### Brief description of the figures

Further features, aspects and advantages of the present invention are given in the following detailed description with reference to the drawings in which:
- Figure 1: schematically depicts an optical network according to an embodiment,
- Figure 2: schematically depicts a state diagram according to an embodiment,
- Figure 3: schematically depicts a state diagram according to a further embodiment, and
- Figure 4a to 4f, 5a to 5e, 6a to 6f, and 7a to 7e: schematically depict an electric power consumption of an optical network element over time according to further embodiments.

### Description of the embodiments

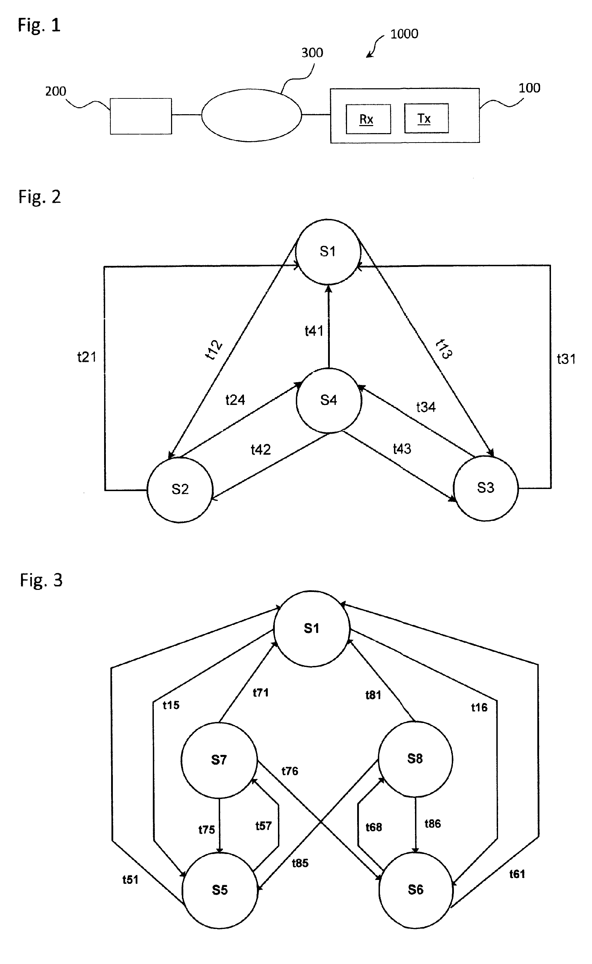

Figure 1 schematically depicts an optical network 1000 according to an embodiment, which presently represents a passive optical network, PON, 1000, wherein in a per se known manner optical signals are exchanged between a plurality of optical network elements 100, 200 over a passive optical medium 300. The medium 300 may e.g. comprise tree topology.

Also depicted is an optical network element 100 according to an embodiment. Presently, the optical network element 100 is an optical network unit, ONU, configured to operate within said PON. The ONU 100 is connected with an optical line terminal, OLT, 200, of said PON 1000, via said medium 300. Likewise, further ONUs (conventional or according to the embodiments) may be connected to said OLT 200 via said medium, which, however, are not depicted for the sake of clarity.

The ONU 100 comprises a receiver Rx which is configured to receive optical downstream transmissions from the OLT 200, and a transmitter Tx, which is configured to transmit optical upstream transmissions to the OLT 200.

According to the principle of the embodiments, an optical network element 100, particularly optical network unit, ONU, 100 for a passive optical, network, PON, 1000, is proposed, wherein said optical network element 100 is configured to operate in a primary operational state in which said optical network element 100 can exchange optical signals with at least one further optical network element 200, particularly an optical line terminal (OLT) 200 of a PON 1000, wherein said optical network element 100 is configured to operate in at least one secondary operational state in which an electrical power consumption of said optical network element 100 is lower as compared to said primary operational state, wherein said optical network element is configured to directly transit from the primary operational state to said at least one secondary operational state.

Although the principle according to the embodiments is not limited to ONUs 100 for a PON 1000, for illustrative purposes, the embodiments explained below primarily refer to an optical network element 100 being configured as an ONU 100.

Figure 2 schematically depicts a state diagram of the ONU 100 (Figure 1) according to an embodiment, wherein operational states of the ONU 100 and corresponding state transitions are illustrated. In the further description, the expression "state" will be used synonymously with the expression "operational state".

A primary operational state, in which said ONU 100 is fully operational and especially can exchange optical signals with at least one further optical network element,such as the OLT 200, is denoted with reference sign S1.

Advantageously, according to an embodiment, said ONU 100 is configured to operate in at least one secondary operational state S2, in which an electrical power consumption of said ONU 100 is lower as compared to said primary operational state, and said ONU 100 is configured to directly transit from the primary operational state S1 to said at least one secondary operational state S2, i.e. in such cases where no data is to be exchanged with the OLT 200. The respective state transition is denoted with reference sign t12. Thus, by instantly transiting from operational state S1 to operational state S2, a considerable reduction of electric energy consumption is attained, in contrast to conventional systems, which require a plurality of intermediate states to be traversed prior to entering a low power state. Moreover, complexity of the underlying state machine/diagram is reduced, since only the two states S1, S2 are involved.

According to a preferred embodiment, said ONU is configured to operate in the aforementioned first secondary operational state S2 in which said ONU 100 can deactivate its optical receiver Rx (Figure 1) and its optical transmitter Tx, and in a second secondary operational state S3, in which said optical receiver Rx is activated, and in which said ONU 100 can deactivate said optical transmitter Tx. Hence, the state S2 may also be referred to as a "sleep state", and the state S3 may also be referred to as a "doze state", wherein the doze state S3 comprises reduced electric power consumption with respect to the primary operational state S1 since the transmitter Tx may be deactivated in state S3. In the sleep state S2, the ONU 100 comprises reduced electric power consumption with respect to the doze state S3 because in addition to the transmitter Tx, also the receiver Rx may be deactivated.

According to a further embodiment, starting from the primary operational state S1, which may also be denoted as active state, and in analogy to the transition t12, the ONU 100 may also directly transit to the doze state S3, cf. state transition t13. Thus, according to the present embodiment, starting from the active state S1, the ONU 100 may directly enter sleep mode (state transition t12) or doze mode (state transition t13), preferably without being required to assume any intermediate states, which reduces electrical energy consumption since the energy saving sleep state S2 or doze state S3 may promptly be attained.

According to a further embodiment, the ONU 100 may directly return from sleep state S2 to active state S1, cf. state transition t21. According to a further embodiment, the ONU 100 may directly return from doze state S3 to active state S1, cf. state transition t31.

According to a further advantageous embodiment, said ONU 100 is configured to transit from the first secondary operational state S2 to the second secondary operational state S3 and/or vice versa without transiting to the primary operational state S1. As can be seen from Figure 2, transiting from state S2 to state S3 may include transiting via the further, ternary, operational state S4, namely by state transitions t24, t34. Likewise, transiting from state S3 to state S2 includes transiting via the ternary state S4, namely by state transitions t34, t42.

According to an embodiment, the ONU 100 is configured to provide a reduced functionality within said first ternary operational state S4 as compared to the active state S1 in order to reduce an electrical power consumption, wherein particularly a packet processor functionality is deactivated in said first ternary operational state S4. According to an embodiment, in ternary state S4 the ONU is configured to only to parse messages that indicate traffic waiting, so that a decision can be made to transit from state S4 to active state S1 (cf. state transition t41) or to doze state S3 (cf. state transition t43) if necessary. Otherwise, the ONU 100 may e.g. transit from ternary state S4 to sleep state S2.

According to an embodiment, the ONU 100 is configured to receive from a further optical network element such as e.g. from the OLT 200, a command which indicates that the ONU 100 shall transit to said at least one secondary operational state, i.e. sleep state S2 or doze state S3. Upon receipt of such command, the ONU 100 may perform the corresponding state transition t12, t13.

According to a further embodiment, the active state S1 may be characterized by one or more of the following criteria:
- This is the regular operational state, in which the ONU 100 consumes full power since both transmitter Tx and receiver Rx are activated for data exchange with OLT 200. I.e., in active state S1, the ONU 100 has the capability to transfer data in two directions (upstream/downstream). According to further embodiments, from active state S1, transitions t12, t13 to low power states S2, S3 are allowed. Upon transit e.g. to sleep state S2, the ONU 100 may send a "Sleep_Request (Awake)" message to the OLT 200 to notify the OLT 200 correspondingly.

According to a further embodiment, the sleep state S2 may be characterized by one or more of the following criteria:
- The ONU 100 retains the ability to wake up based on local stimulus. Before exiting this state, according to an embodiment, the ONU 100 may ensure that it is fully powered up, synchronized, and capable of responding to both upstream (US) and downstream (DS) traffic and control. This may e.g. be achieved by activating the transmitter Tx and the Receiver Rx when leaving the sleep state S2. Note, however, that during the sleep state (i.e., apart from preparing to leave the sleep state), Rx and Tx are usually deactivated to achieve the desired reduction in electrical power consumption.

According to a further embodiment, the doze state S3 may be characterized by one or more of the following criteria:
- The receiver Rx is activated, and transmitter Tx may be deactivated. The ONU 100 may listen to the DS signal and forwards DS traffic from access (PON interface) to e.g. a home network (UNI, not shown), which is connected to said ONU 100. According to an embodiment, in the doze state S3 the ONU 100 is configured to wake up based on local stimulus and/or receipt of a "DozeAllow (OFF)" or "forced wakeup indication" command from OLT 200. According to an embodiment, before exiting the doze state S3 (e.g. for transiting to active state S1), the ONU 100 ensures that it is fully powered up and capable of responding to both US and DS traffic control (e.g. by activating transmitter Tx and receiver Rx).

According to a further embodiment, the first ternary state S4 ("checking state") may be characterized by one or more of the following criteria:
Preferably, the ONU's electric power consumption is lower than in the active state S1, although both transmitter Tx and receiver Rx may be are activated. According to an embodiment, the checking (or "probing") state S4 could require only a subset of functions (e.g., implemented in hardware) needed compared to the full data transmission (e.g. packet processor) of active state S1. The ONU 100 may be configured only to parse messages that indicate traffic waiting - no actual messages can be processed. According to an embodiment, in the checking state S4, the ONU may be configured to signal waiting data for upstream transmission or to signal "going to sleep" to the OLT 200 prior to transiting by transition t42 to sleep state S2.

The following table 1 comprises power management parameters which may be used according to some embodiments.

| Table 1 | | | |
|---|---|---|---|
| Parameter | Description | Defined by | Known by |
| T_{S} | Local timer at ONU 100, controls the duration that ONU 100 is in sleep state S2, if not truncated by a local wakeup indication (LWI) message. | ONU 100 | ONU 100, OLT 200 |
| T_{C} | Local timer at ONU 100, controls the duration that ONU 100 is in checking state S4, if not truncated by a SleepAllow(OFF)-SA(OFF)/DA(OFF)/FWI/LWI messages | OLT 200 | ONU 100, OLT 200 |
| T_{L} | Local timer at ONU 100, controls the duration that ONU 100 is in doze state S3, if not truncated by a DA(OFF)/FWI/LWI message. | ONU 100 | OLT 200, ONU 100 |

In the following description, further advantageous embodiments related to the state diagram of Figure 2 are presented.

According to one embodiment, it is supposed that the ONU 100 (Fig. 1) is initially in the active state S1 (Figure 2). According to one embodiment, if the ONU 100 receives a Sleep_Allow(ON) ("SA(ON)") message from the OLT 200, the ONU 100 may transit (cf. arrow t12) to the sleep state S2, and a cyclic sleep mode starts for a duration T_{S}, cf. table 1 above. After the duration T_{S}, the ONU 100 transits (cf. arrow t24) to checking state S4 and remains in state S4 for a duration T_{C} to check for an indication message (IND) sent from the OLT 200. After duration T_{C}, if IND = 0, the ONU 100 will send a local sleep indication (LSI)/Sleep_Request (Sleep) (SR(Sleep)) to the OLT 200 to notify OLT that the ONU continues cyclic sleep mode; then, the ONU 100 transits to state S2 (arrow t42) and sleeps again for another T_{S}. Otherwise, (IND = 1), the ONU 100 sends a local doze indication (LDI)/Sleep_Request(Doze) message to the OLT 200 to notify the OLT that it is going to enter a cyclic doze mode. Then, the ONU 100 transits (arrow t43) from checking state S4 to doze state S3, and cyclic doze mode starts.

According to an embodiment, the ONU 100 can terminate cyclic sleep mode by sending a local wakeup indication LWI/Sleep_Request (Awake) (SR (Awake)) message to OLT 200, either while the ONU is in sleep state S2 or in checking state S4, and then it transits to active state S1 again (arrow t21 or t41). Furthermore, if the OLT 200 does not allow the ONU 100 to experience cyclic sleep mode, the OLT transmits a Sleep_Allow(OFF) (SA(OFF)) or a FWI message to the ONU during its checking state S4, whereby the ONU 100 is forced to active state S1.

According to an embodiment, if the ONU 100 receives a Doze_Allow (ON) (DA(ON)) message from the OLT 200, the ONU 100 transits from active state S1 to doze state S3, cf. arrow t13, so that cyclic doze mode starts for duration T_{L}. After duration T_{L}, the ONU 100 may transit to checking state S4 during which it may send a LSI or a LDI message to the OLT 200. If the ONU 100 sends LSI message to the OLT 200, meaning that the ONU 100 is going to move to cyclic sleep mode, the ONU 100 then transits from checking state S4 to sleep state S2. Otherwise (ONU sends LDI message to the OLT), the ONU 100 transits to doze state again, cf. transition t43.

According to an embodiment, the ONU can also terminate cyclic doze mode by sending a local wakeup indication LWI/ SleepRequest (Awake) (SR (Awake)) message to the OLT, either while the ONU 100 is in doze state S3 or in checking state S4, and then it transits to active state S1. Furthermore, if the OLT 200 does not allow the ONU 100 to experience cyclic doze mode, the OLT 200 transmits a Doze_Allow (OFF) (DA(OFF)) or a FWI message to ONU 100 during its checking or doze states S4, S3 and the ONU 100 is forced to transit to active state S1.

According to an embodiment, during the active state S1, if the ONU 100 receives a SA(ON) or a DA(ON) message from the OLT 200, the ONU 100 will transit to sleep state S2 or to doze state S3, respectively, and parts or all of the above explained procedure may be repeated.

According to a preferred embodiment, an ONU 100 which is in sleep state S2 or doze state S3 remains registered at the OLT 200 even if the ONU 100 does not currently, i.e. during states S2, S3, communicate with the OLT 200. According to a further embodiment, the OLT 200 may consistently assign at least a predetermined minimum US bandwidth to each registered ONU 100 so that the ONU 100 can send a bandwidth request to OLT 200, preferably in every dynamic bandwidth allocation (DBA) cycle, whether the ONU 100 is in sleep state S2 or in doze state S3, without waiting for a sleep/doze period (T_{S}, T_{L}) to expire. For doing so, according to one embodiment, the ONU 100 may temporarily transit from states S2, S3 to state S4. Alternatively, the ONU 100 may temporarily activate its transmitter (i.e., during states S2, S3) for sending said bandwidth request to the OLT 200. Thus, the ONU can terminate low power consumption mode whenever LWI/SR(Awake) bit appears.

According to an embodiment, the duration T_{S} may be chosen to be similar to Tsleep in the "Asleep" state of the XG-PON standard (ITU-T G.987.3 Section 16). According to an embodiment, the duration T_{C} may be chosen to be similar to Taware in the SleepAware and DozeAware states of the XG-PON standard. According to an embodiment, the duration T_{L} may be chosen to be similar to Tsleep in the listen state of the XG-PON standard.

According to a further embodiment, the durations T_{S} and T_{L} (also cf. table 1 above) do not need to be identical, i.e. different waiting times for the ONU remaining in the respective sleep/doze states S2, S3 prior to transiting to the checking state S4 may be chosen.

The following table 2 comprises input parameters to an ONU's state machine which may be used according to some embodiments.

| Table 2 | | |
|---|---|---|
| **Input categories** | **Inputs** | **Semantics** |
| Power mode transition events from OLT | Sleep_Allow (ON) abbr.:"SA(ON)" | The OLT 200 grants permission to the ONU 100 to enter cyclic sleep mode, so that ONU 100 can transit from active state S1 to sleep state S2. |
| | Sleep_Allow (OFF) abbr.:"SA(OFF)" | The OLT 200 withholds consents to exercise cyclic sleep mode |
| | Doze_Allow (ON) abbr.:"DA(ON)" | The OLT 200 grants permission to the ONU 100 to enter cyclic doze mode, so that the ONU 100 can transit from active state S1 to doze state S3. |
| | Doze_Allow (OFF) abbr.:"DA(ON)" | The OLT 200 withholds consents to exercise cyclic doze mode |
| Bit indication event | Forced Wakeup Indication, FWI | Transmitting FWI as a flag of an allocation structure, the OLT 200 requests immediate wakeup of ONU 100 and transition to a full power state, e.g. active state S1. |
| | Bit indication IND | The OLT 200 sends IND bit to ONU 100 when ONU 100 transits to checking state S4 from sleep state S2. |
| Timer events | T_{S} expiration | The event applies in sleep state S2, controlling the sojourn in the state S2. |
| | T_{C} expiration | The event applies in checking state S4, controlling the sojourn in the state S4. |
| | T_{L} expiration | The event applies in doze state S3, controlling the sojourn in the state S3. |
| Local events | Local sleep indication, LSI | The ONU 100 is willing to exercise cyclic sleep power management mode. |
| | Local doze indication, LDI | The ONU 100 is willing to exercise cyclic doze power management mode. |
| | Local wakeup indication, LWI | A local stimulus prevents the ONU 100 from exercising any power management mode. |

According to an embodiment, the parameters (or bits representing these parameters) SA(ON), SA(OFF), DA(ON), DA(OFF), and IND are controlled by the OLT 200. According to a further embodiment, the LWI, LSI, and LDI events may be conceptually derived from ONU's ternary stimulus.

The following table 3 comprises ONU State transition and output information which may be used according to some embodiments.

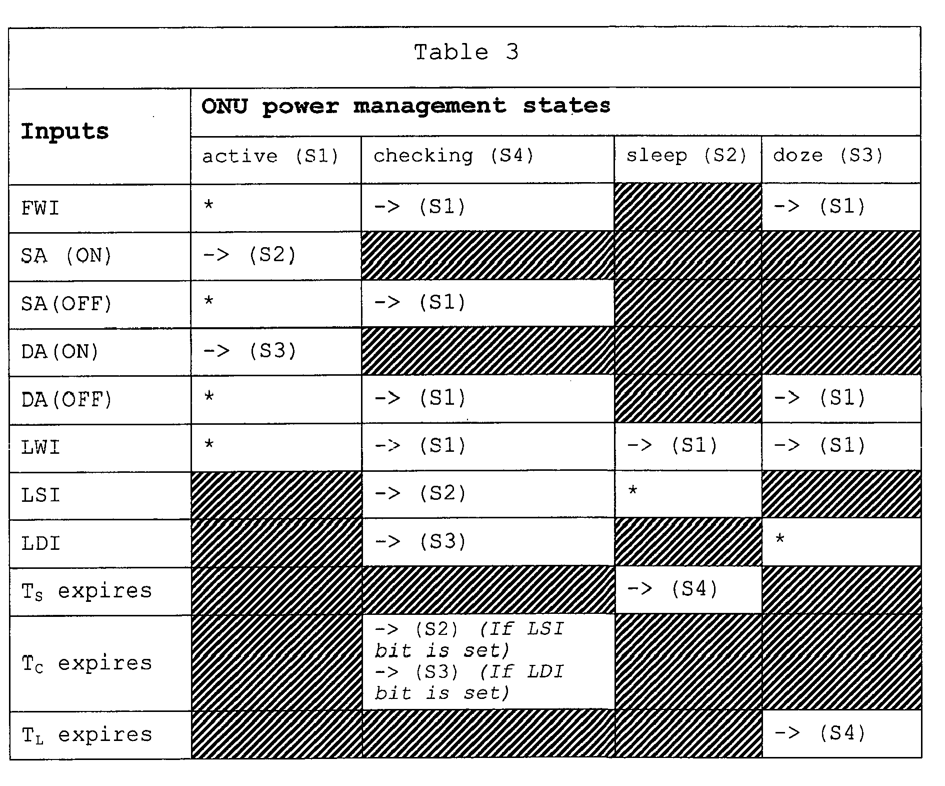

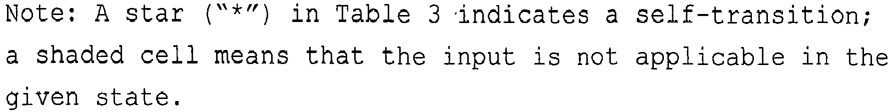

According to a further embodiment, it is supposed that the parameters listed in Table 2 above are set based on the following criteria:
- LWI/SR(Awake): is set when US traffic arrives (bit can be set when there is only one US packet or there are P many US packets, here assumed that LWI = 1 whenever there is one US packet).
- SA(ON): * For the first time (ONU 100 is in active state S1 and has never before transited to any state S2, S3 belonging to low power modes), SA(ON) bit is set when OLT 200 does not receive SR(Awake) message for a duration τ (meaning that there is no US traffic during τ) and there is no downstream (DS) traffic at the end of τ.
- * When the ONU 100 transits from any other state to the active state S2 for US traffic transmission, SA(ON) bit is set whenever there is no US traffic (the ONU has transmitted all US traffic) and at that time, there is no DS traffic.
- DA(ON) is set when OLT 200 does not receive SR(Awake) message for a duration τ (meaning that there is no US traffic for τ) but there is downstream traffic at the end of τ.
- IND bit indicates the presence of DS traffic. The IND bit is set when DS traffic (can be one or P' many downstream packets, here assumed that IND = 1 when there is one DS packet) addressed to ONU 100 during its previous sleep time. In addition, the arrivals of DS traffic during checking state S4 is notified only in the next checking state.
- LSI is set when T_{C} expires and IND = 0 (ONU 100 continues sleep state S2) or T_{C} expires and no DS traffic for a duration τ₁ (τ₁ ≤ T_{L}) while the ONU 100 is in doze state S3 (ONU 100 is in cyclic Doze mode and there is no more DS traffic to forward).
- LDI is set when T_{C} expires and IND = 1 (ONU 100 transits from cyclic sleep mode to cyclic doze mode) or T_{C} expires and there was DS traffic for a duration τ₁ (τ₁ ≤ T_{L}) while the ONU 100 is in doze state S3 (ONU continues cyclic doze mode to transmit DS traffic).

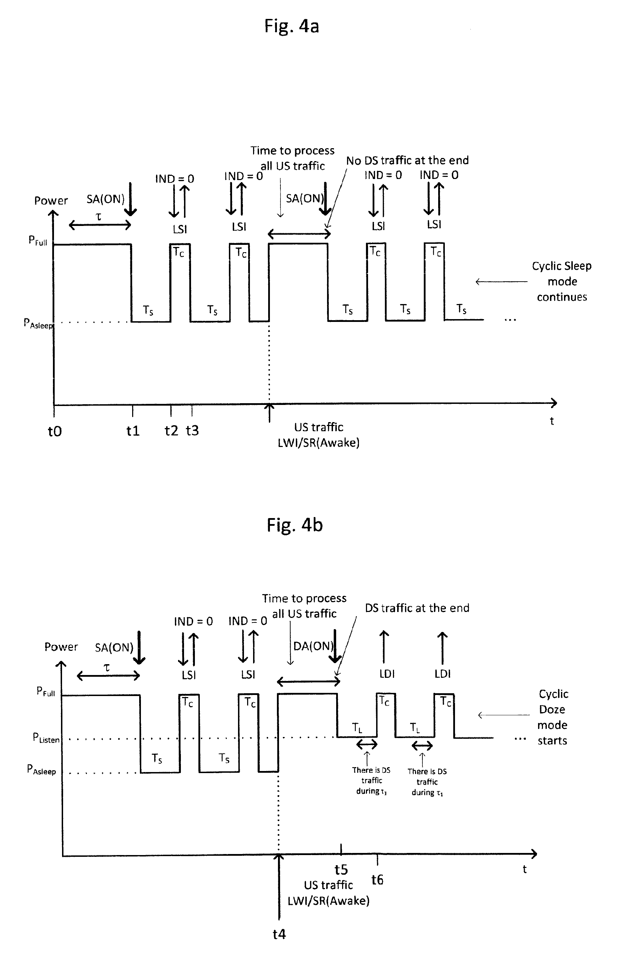

According to further embodiments, it is supposed that the ONU 100 is initially in the active state S1. Then, the time diagrams discussed below with reference to Fig. 4a to 4f may be obtained.

Figure 4a depicts a time diagram of an electric power consumption of an ONU 100 according to an embodiment. Initially, at time t0, the ONU 100 is in the active state S1 (Fig. 2). If there is no US data during a time interval τ and no DS data at the end of said time interval τ, the OLT 200 allows the ONU 100 to transit to sleep state S2. (according to an embodiment, the OLT 200 knows the absence of US traffic if it does not receive a SR(Awake) message from the ONU 100 for a certain time, e.g. a little bit longer than τ). Thus, as can be seen from Fig. 4a, at τ₁ the ONU 100 transits to sleep state S2 which results in a reduction of electrical power consumption from P_{Full} at t < τ₁ to P_{Asleep} from τ₁ onwards. After expiry of sleep duration T_{S} as explained above, at t2, the ONU 100 transits to checking state S4 for the duration T_{C} to again return to the sleep state S2 at time t3. Thereby, a "cyclic sleep mode" is established. Note that in the present embodiment, the electric power consumption during checking state S4 is not reduced as compared to active state S1. However, as already mentioned above, according to a preferred embodiment, the ONU 100 may in the checking state S4 also provide a reduced functionality (e.g., no packet processing and the like), which would yield a reduced electric power consumption in the checking state S4. This, however, is not depicted by Fig. 4a for simplicity.

Figure 4b depicts a time diagram of an electric power consumption of an ONU 100 according to a further embodiment. As can be seen, at time t4, US traffic arrives during the sleep state S2, a LWI/ SR(Awake) bit is set and the ONU 100 transits to active state S1 and stays there to transmit all US traffic. After transmitting all US traffic and if there is DS traffic, the OLT 200 allows the ONU 100 to transit to cyclic doze mode by sending DA(ON) message, so that from t5 on, a reduced electric power consumption P_{Listen} corresponding with the doze mode can be attained. At t6, the ONU 100 transits to checking state S4, and returns to doze state S3 after duration T_{C}.

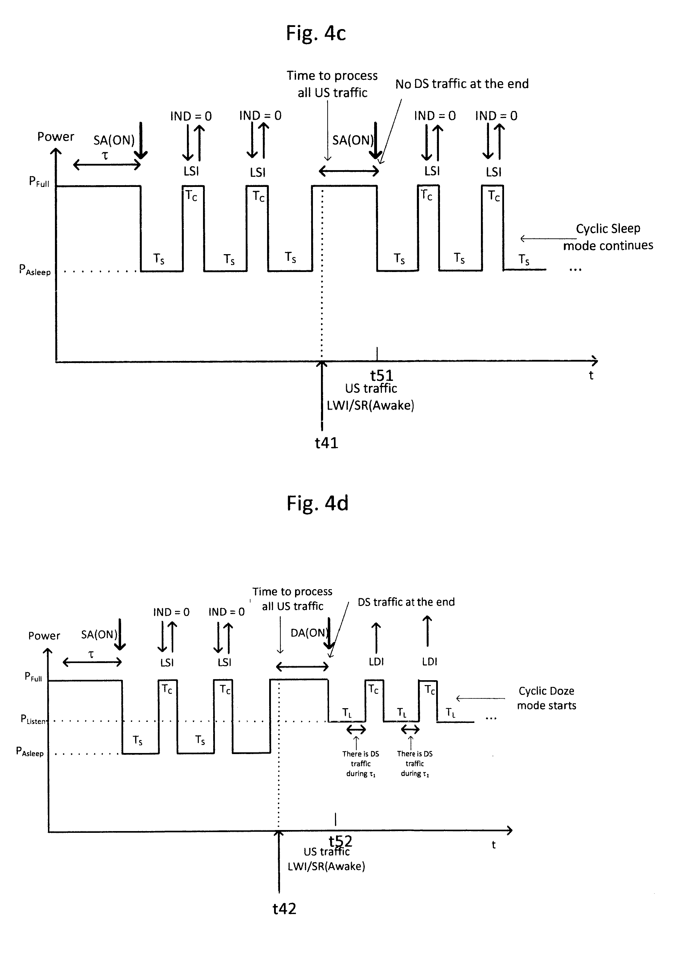

Figure 4c depicts a time diagram of an electric power consumption of an ONU 100 according to a further embodiment. As can be seen, at time t41, US traffic arrives during checking state, LWI/ SR(Awake) bit is set and the ONU 100 transits to active state S1 and stays there to transmit all US traffic. After transmitting all US traffic, there is no DS traffic and then, the OLT 200 allows the ONU 100 to transit at time t51 to sleep state again by sending SA(ON) message.

Figure 4d depicts a time diagram of an electric power consumption of an ONU 100 according to a further embodiment. As can be seen, at time t42 US traffic arrives during checking state S4, LWI/ SR(Awake) bit is set and ONU 100 transits to active state S1 and stays there to transmit all US traffic. After transmitting all US traffic, there is DS traffic at the end, at time t52, the OLT 200 allows the ONU 100 to transit to cyclic doze mode by sending DA(ON) message, whereupon ONU 100 transits to doze state S3 and stays therein for duration T_{L}, then returns to checking state S4, and so on.

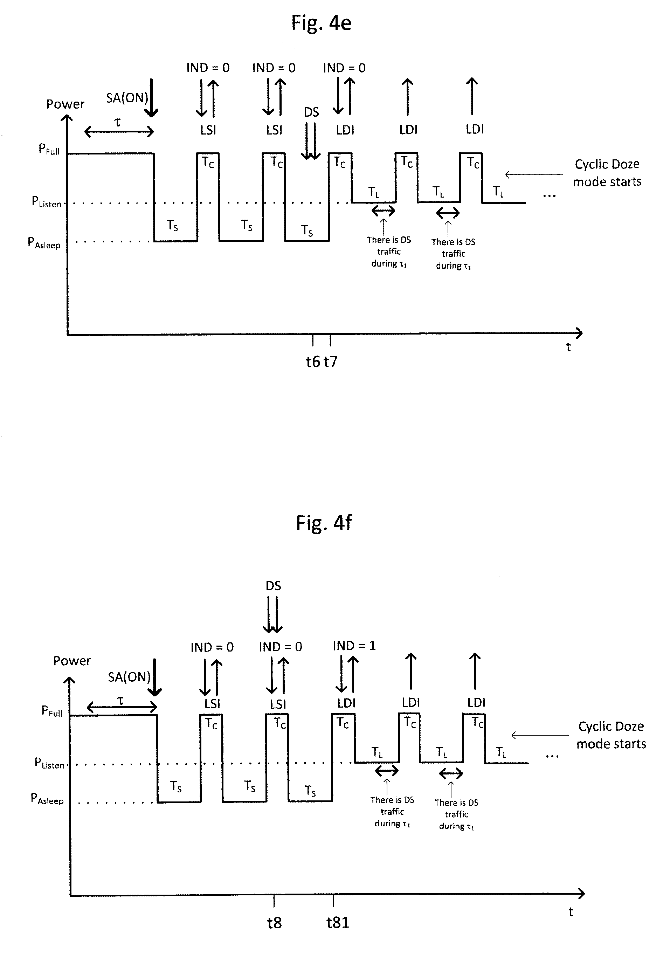

Figure 4e depicts a time diagram of an electric power consumption of an ONU 100 according to a further embodiment. As can be seen, at time t6, DS traffic arrives during sleep state S2 of the ONU (with low electric power requirement P_{ASleep}), so that ONU 100 transits to checking state S4 at time t7; the ONU 100 is notified by IND message sent from the OLT 200. Then, the ONU transits to cyclic doze mode to forward DS traffic.

Figure 4f depicts a time diagram of an electric power consumption of an ONU 100 according to a further embodiment. As can be seen, at time t8 DS traffic arrives during checking state S4, the ONU 100 is notified by IND message sent from the OLT 200 in next checking state starting from time t81, then the ONU sends LDI message to the OLT to notify that it is going to cyclic doze mode, resulting in reduced electric power consumption P_{Listen}.

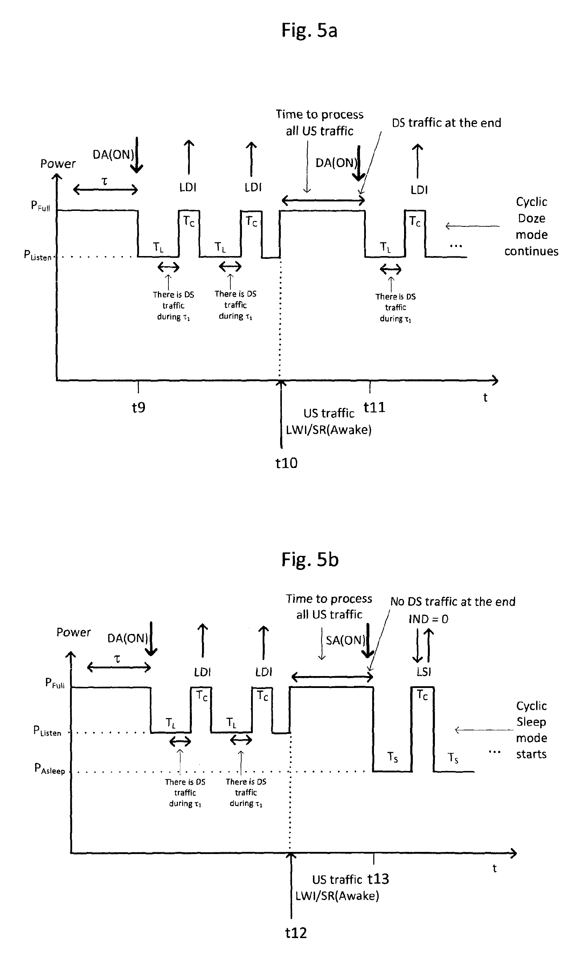

According to a further embodiment, which is depicted by Fig. 5a, if there is no US traffic during time interval τ but DS traffic at the end of time interval τ, e.g. at time t9, the OLT 200 allows the ONU 100 to transit to cyclic doze mode. Moreover, at time t10, US traffic arrives during doze state S3, LWI/ SR(Awake) bit is set and ONU 100 transits to active state S1 (Fig. 2) to process said US traffic. At the end of US traffic transmission, defined by time t11 there is DS traffic and then, the OLT 200 allows the ONU 100 to continue cyclic doze mode by sending a DA(ON) message.

Figure 5b depicts a time diagram of an electric power consumption of an ONU 100 according to a further embodiment. As can be seen, at time t12 US traffic arrives during doze state S3, LWI/ SR(Awake) bit is set and ONU 100 transits to active state S1 to process said US traffic. At the end of US traffic transmission, at time t13, there is no DS traffic and then, the OLT 200 allows the ONU 100 to transit to cyclic sleep mode by sending an SA(ON) message. The cyclic sleep mode starts.

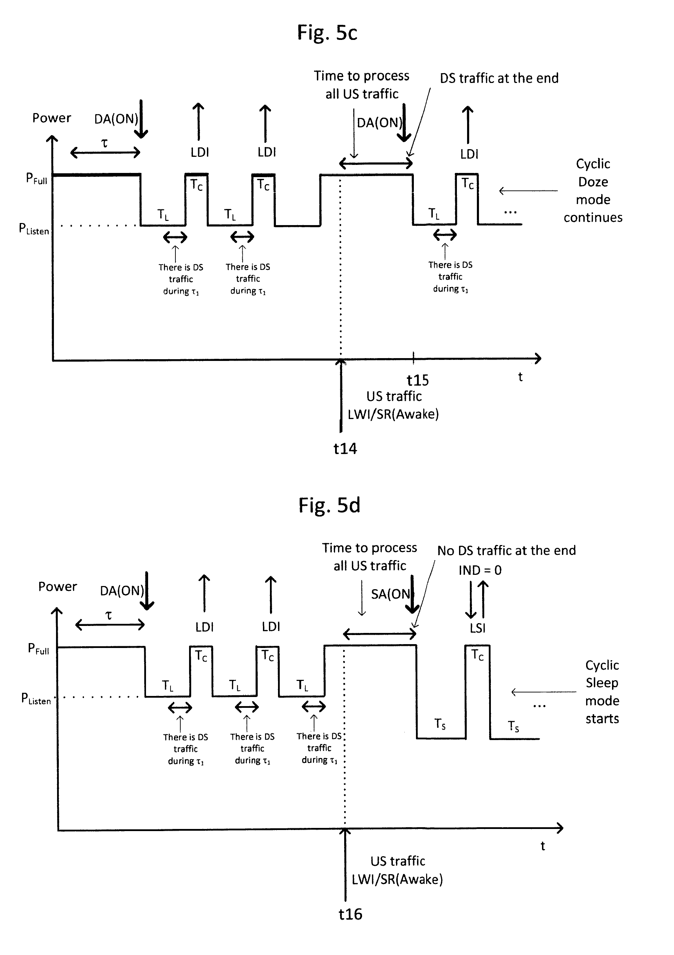

Figure 5c depicts a time diagram of an electric power consumption of an ONU 100 according to a further embodiment. As can be seen, at time t14, US traffic arrives during checking state S4, LWI/ SR(Awake) bit is set and ONU 100 transits to active state S1 to process all US traffic. At the end of US transmission, at time t15, there is DS traffic and then, the OLT 200 allows the the ONU 100 to continue cyclic doze mode.

Figure 5d depicts a time diagram of an electric power consumption of an ONU 100 according to a further embodiment. As can be seen, at time t16, US traffic arrives during checking state S4, ONU 100 transits to active state S1 to process said US traffic. At the end of US traffic transmission, there is no DS traffic and then, the OLT 200 allows the ONU 100 to move to cyclic sleep mode.

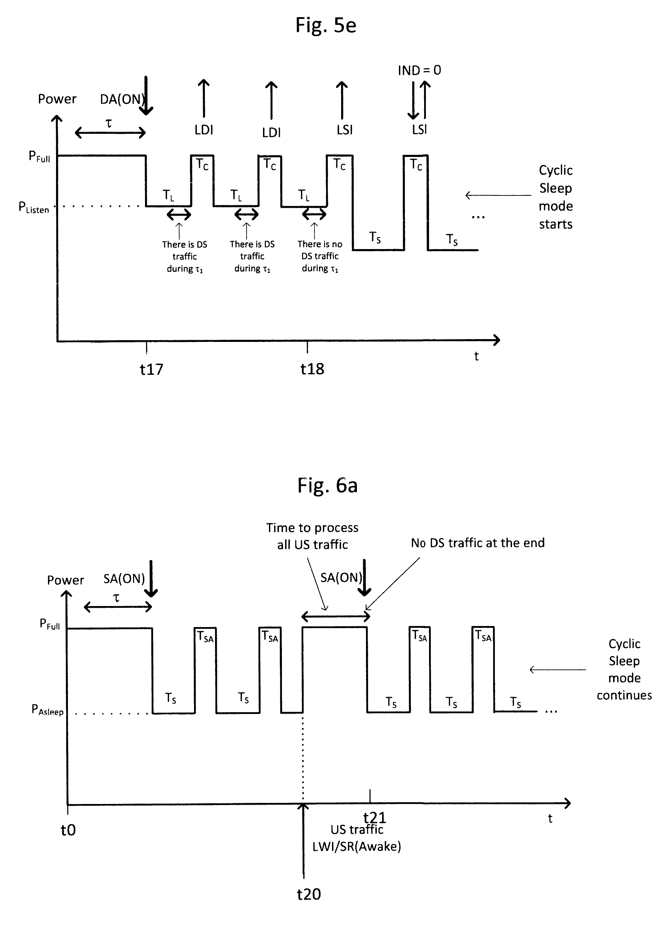

Figure 5e depicts a time diagram of an electric power consumption of an ONU 100 according to a further embodiment. As can be seen, starting from t17, the ONU 100 is in cyclic doze mode. During doze state S3, from time t18, there is no DS traffic for a duration τ₁; ONU 100 goes to cyclic sleep mode by sending a LSI message to the OLT 200 while the ONU 100 transits from doze state S3 to checking state S4.

The embodiment according to Fig. 2 is particularly advantageous over existing ONU configurations in that only four states S1, S2, S3, S4 are required to efficiently control the ONU's operation, including sleep state S2 and doze state S3. Moreover, the ONU 100 according to the embodiments is not required to transit numerous operational states to enter the sleep or doze states S2, S3. Rather, the ONU 100 can directly transit from the active state S1 to the sleep or doze states S2, S3. Moreover, the ONU 100 is not required to enter the active state S1 when changing from sleep state S2 to doze state S3 and vice versa.

Figure 3 schematically depicts a state diagram of the ONU 100 (Figure 1) according to a further embodiment, wherein operational states of the ONU 100 and corresponding state transitions are illustrated.

A primary operational state, in which said ONU 100 is fully operational and especially can exchange optical signals with at least one further optical network element such as the OLT 200, is denoted with reference sign S1.

According to the present embodiment, the ONU 100 is configured to operate in a first secondary operational state S5 in which said ONU 100 can deactivate an optical receiver Rx and an optical transmitter Tx, and a second secondary operational state S6 in which said optical receiver Rx is activated and in which said ONU 100 can deactivate said optical transmitter Tx. The state S5 may be denoted as sleep state, in analogy to the sleep state S2 of the embodiment of Figure 2, whereas the state S6 may be denoted as doze state, in analogy to the doze state S3 of the embodiment of Figure 2.

In contrast to the embodiment of Figure 2, the embodiment of Figure 3 provides two ternary states S7, S8, wherein the first ternary state S7 is associated with the sleep state S5, and wherein the second ternary state S8 is associated with the doze state S6.

According to the present embodiment, the ONU 100 is configured to transit from the first secondary operational state S5 to the second secondary operational state S6 and/or vice versa without transiting to the primary operational state S1. More precisely, according to the present embodiment, said ONU 100 is configured to transit from the first secondary operational state S5 to the second secondary operational state S6 via said first ternary operational state S7, and/or to transit from the second secondary operational state S6 to the first secondary operational state S5 via said second ternary operational state S8.

According to a preferred embodiment, said GNU 100 is configured to deactivate said optical transmitter Tx in said first ternary operational state S7, whereby a reduction of electric power consumption is achieved. According to a particularly preferred embodiment, during state S7 said optical transmitter Tx is always off.

According to a further embodiment, the active state S1 of Figure 3 may be characterized by one or more of the following criteria:
- Active state S1 represents a normal operation of the ONU 100. The ONU 100 usually consumes full power and has capability to transfer data in two directions, because both receiver Rx and transmitter Tx are activated. Transitions to low(er) power states S5, S6 are allowed. Upon transit to these states, the ONU 100 may send a Sleep_Request (Awake) message to the OLT 200.

According to a further embodiment, the sleep state S5 of Figure 3 may be characterized by one or more of the following criteria:
- The ONU 100 retains ability to wake up based on local stimulus. This state preferably persists for a duration T_sleep if not truncated by arrival of a local wakeup indication LWI. Before exiting this state, the ONU 100 preferably ensures that it is fully powered up, synchronized, and capable of responding to both US and DS traffic and control. This may e.g. be achieved by activating the transmitter Tx and the Receiver Rx when leaving the sleep state S5. Note, however, that during the sleep state S5 (i.e., apart from preparing to leave the sleep state), Rx and Tx are usually deactivated to achieve the desired reduction in electrical power consumption.

According to a further embodiment, the state S7 of Figure 3, which may also be denoted as "sleep aware state", may be characterized by one or more of the following criteria:
- This state persist for a duration T_Saware if not truncated by local stimulus LWI or receipt of a SleepAllow(OFF) (SA(OFF)) or a forced wake up indication (FWI) message from the OLT. (Alternatively, the sleep aware state S7 can have only the Rx ON and Tx OFF when using this state only to probe for availability of traffic on the downstream).

According to a further embodiment, the state S6 of Figure 3, which may also be denoted as "doze state", may be characterized by one or more of the following criteria:
- The ONU listens to the DS signal and forwards DS traffic from access (PON interface) to home network (UNI), while retaining ability to wake up based on local stimulus or receipt of DozeAllow(OFF) - DA(OFF)- or a FWI from the OLT. Preferably, the receiver Rx is activated in state S6, while the transmitter Tx may be deactivated. Before exiting this state, the ONU ensures that it is fully powered up and capable of responding to both US and DS traffic control.

According to a further embodiment, the state S8 of Figure 3, which may also be denoted as "doze aware state", may be characterized by one or more of the following criteria:
- This state persists for a duration T_Daware if not truncated by local stimulus LWI or receipt of a DA(OFF) or a FWI from OLT. Preferably, both receiver Rx and Transmitter Tx are activated during state S8.

The following table 4 comprises power management parameters which may be used according to some embodiments.

| Table 4 | | | |
|---|---|---|---|
| Parameter | Description | Defined by | Known by |
| T_sleep | Local timer at ONU 100, controls the duration that the ONU is in sleep state S5, if not truncated by a LWI message | ONU | ONU, OLT |
| T_Saware | Local timer at ONU 100, controls the duration that the ONU is in sleep aware state S7, if not truncated by a local stimulus LWI or SA(OFF)/FWI sent from the OLT 200. | OLT | ONU, OLT |
| T_listen | Local timer at ONU 100, controls the duration that the ONU is in doze state S6, if not truncated by a local stimulus LWI or DA(OFF)/FWI message from the OLT 200. | ONU | OLT, ONU |
| T_Daware | Local timer at ONU 100, controls the duration that the | OLT | OLT, ONU |
| | ONU is in doze aware state S8, if not truncated by a local stimulus LWI or DA(OFF)/FWI sent from the OLT. | | |

In the following description, further advantageous embodiments related to the state diagram of Figure 3 are presented. According to one embodiment, it is supposed that the ONU 100 (Fig. 1) is initially in the active state S1 (Figure 3).

According to one embodiment, if the ONU 100 receives a Sleep_Allow(ON) ("SA(ON)") message from the OLT 200, the ONU 100 will transit to sleep state S5, cf. transition t15 (and cyclic sleep mode may start) for a duration T_sleep.

According to an embodiment, after T_sleep, the ONU 100 transits to sleep aware state S7 (transition t57) for duration T_Saware, if a local wakeup indication (LWI)/Sleep_Request (Awake) (SR(Awake)) message is not stimulated or the ONU 100 does not receive a SA(OFF) or a FWI messages from the OLT 200. In case the ONU 100 receives those messages during sleep aware state S7, according to one embodiment, the sleep aware state is terminated immediately and the ONU 100 transits to active state S1, cf. transition t71. However, if the ONU 100 receives a Doze_Allow (DA(ON)) message from OLT 200 during sleep aware state, after duration T_Saware in that state, it will transit to the doze state, cf. transition t76, and a cyclic doze mode may start. In addition, during sleep state S5, the ONU 100 can terminate cyclic sleep mode by sending a LWI /SR (Awake) message to the OLT 200, then, the ONU 100 may transit by means of transition t51 to active state S1.

According to an embodiment, starting from the active state S1, if the ONU 100 receives a Doze_Allow (ON) (DA(ON)) message from the OLT 200, the ONU transits to doze state S6 by means of transition t16, and a cyclic doze mode may start for duration T_listen (the cyclic doze mode may e.g. be characterized by cyclically transiting between states S6, S8 by means of transitions t68, t86). After T_listen, the ONU 100 transits to doze aware state S8, cf. arrow t68, for a duration T_Daware if a local wakeup indication (LWI)/Sleep_Request (Awake) (SR(Awake)) message is not stimulated or if the ONU does not receive a DA(OFF)/FWI message from the OLT. In case the ONU receives those messages during doze aware state S8, the doze aware state S8 is terminated immediately and the ONU 100 transits to active state S1 by means of transition t81. However, if the ONU receives a SA(ON) message from OLT during doze aware state S8, after duration T_Daware in that state S8, it will transit to sleep state S5 via transition t85, and a cyclic sleep mode may start, which may e.g. be characterized by cyclically transiting between states S5, S7 by means of transitions t57, t75.

According to an embodiment, during doze state S6, the ONU 100 may terminate cyclic doze mode by sending a LWI/SR (Awake) message to the OLT 200, then, the ONU 100 may transit to active state via transition t61. Furthermore, if the ONU 100 receives a DA(OFF) or FWI message from the OLT 200, it is forced to transit to active state S1.

According to an embodiment, during the active state S1, if ONU 100 receives a SA(ON) or a DA(ON) message from the OLT 200, the ONU 100 will transit to sleep state S5 or doze state S6, respectively, and the above procedure may be repeated.

According to an embodiment, an ONU 100 which is in the states S5, S6, S7, S8 may remain registered at the OLT 200 even if the ONU 100 does not currently communicate with the OLT 200. In addition, the OLT 200 may consistently assign at least minimum upstream bandwidth to each registered ONU 100 so that the ONU 100 can send bandwidth request(s) to the OLT, e.g. in every DBA cycle, whether the ONU be in sleep state or in doze state without waiting for an asleep/doze period to expire. Thus, the ONU may terminate low power consumption mode whenever a corresponding indication, e.g. represented by an LWI/SR(Awake) bit, appears.

According to a further embodiment, T_listen may be chosen to be similar to the "Tsleep" parameter in Listen state of the XG-PON standard. According to a further embodiment, the parameters T_sleep and T_listen can be different from each other. According to a further embodiment, T_Daware may be chosen to be similar to the "Taware" parameter for the "DozeAware" state of the XG-PON standard. According to a further embodiment, T_Saware and T_Daware can be different from each other.

The following table 5 comprises input parameters to an ONU's state machine which may be used according to some embodiments.

| Table 5 | | |
|---|---|---|
| Input categories | Inputs | Semantics |
| Power mode transition events from OLT | Sleep_Allow (ON) (or SA(ON)) | The OLT 200 grants permission to the ONU 100 to enter cyclic sleep mode, so that ONU 100 can transit from active state S1 or doze aware state S8 to sleep state S5. |
| | Sleep_Allow (OFF) (or SA(OFF)) | The OLT 200 withholds consents to exercise cyclic sleep mode |
| | Doze_Allow (ON) (or DA(ON)) | The OLT 200 grants permission to the ONU 100 to enter cyclic doze mode, so that ONU 100 can transit from active state S1 or sleep aware state S7 to doze state S6. |
| | Doze_Allow (OFF) (or DA(OFF)) | The OLT 200 withholds consents to exercise cyclic doze mode |
| Bit indication event | Forced Wakeup Indication, FWI | Transmitting FWI as a flag of an allocation structure, the OLT 200 requires immediate wakeup and transit to a full power state. |
| Timer events | T_sleep expiration | The event applies in sleep state S5, controlling the ONU's sojourn in the state. |
| | T_Saware expiration | The event applies in sleep aware state S7, controlling the ONU's sojourn in the state. |
| | T_listen expiration | The event applies in doze state S6, controlling the ONU's sojourn in the state. |
| | T_Daware expiration | The event applies in doze aware state S8, controlling the ONU's sojourn in the state. |
| Local events | Local wakeup indication, LWI | A local stimulus prevents the ONU 100 from exercising any power management mode. |

According to an embodiment, the SA(ON), SA(OFF), DA(ON), and DA(OFF) information (e.g., bits), may be controlled by the OLT 200, and the LWI event may conceptually be derived from ONU's ternary stimulus.

The following table 6 comprises ONU State transition and output information which may be used according to some embodiments, preferably such embodiments which are related to the state diagram of Figure 3.

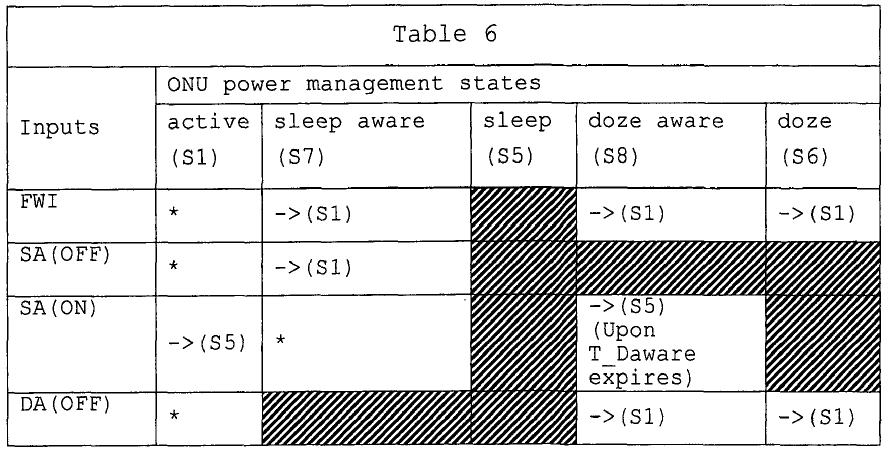

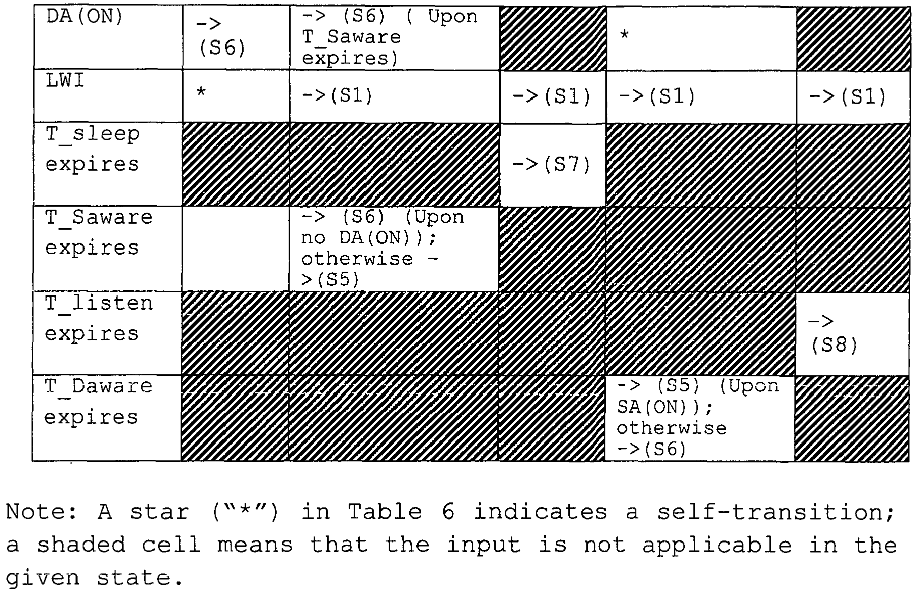

According to a further embodiment, it is supposed that the parameters listed in Table 6 above are set based on the following criteria:
- LWI/ SR(Awake): when US traffic arrives, LWI bit is set and ONU 100 sends SR(Awake) to the OLT 200.
- SA(ON): * For the first time (ONU is in active state S1 and has never been to any state S5 to S8 belonging to low power modes), SA(ON) bit is set when the OLT 200 does not receive SR(Awake) message for a duration τ (meaning that there is no US traffic during τ) and there is no downstream (DS) traffic at the end of τ. * When the ONU 100 transits from any state S5 to S8 belonging to low power mode to active state S1 for US transmission and at the end of US traffic transmission, there is no DS traffic. * ONU is in doze state S6 (Fig. 3) and there is no DS traffic for a duration τ1≤TListen; then the SA(ON) bit is sent to ONU 100 from OLT 200 when ONU 100 transits from doze state S6 to doze aware state S8. Here, it is exemplarily assumed that cyclic doze mode is not truncated by US traffic.
- DA(ON): * For the first time (ONU is in active state S1 and have never been to any state S5 to S8 belonging to low power modes), DA(ON) bit is set when OLT does not receive SR(Awake) message for a duration τ (meaning that there is no US traffic during τ) and there is downstream (DS) traffic at the end of τ. * When ONU transits from any state S5 to S8 belonging to low power mode to active state S1 for US transmission and at the end of US traffic transmission, there is DS traffic. * ONU is in cyclic sleep mode (either in sleep state S5 or sleep aware state S7), if there is DS traffic addressed to ONU 100, then in the following sleep aware state, the DA(ON) bit is sent to ONU 100 from OLT 200. Here, it is assumed that cyclic sleep mode is not truncated by US traffic.

The following abbreviations are used in the time diagrams of Fig. 6a to 7e explained below for simplicity: T_{S} <-> T_sleep, T_{SA}<->T_Saware, T_{L}<-> T_listen, T_{DA}<-> T_Daware.

According to a further embodiment, it is supposed that the ONU 100 is initially in the active state S1. Then, the time diagrams discussed below with reference to Fig. 6a to 7e may be obtained.

Figure 6a depicts a time diagram of an electric power consumption of an ONU 100 according to an embodiment. Initially, at time t0, the ONU 100 is in the active state S1 (Fig. 3). If there is no US during time interval τ and no DS at the end of said time interval τ, the OLT 200 allows the ONU 100 to enter cyclic sleep mode. (The OLT knows the absence of US traffic if it does not receive SR(Awake) message from the ONU 100 for a certain time, e.g. a little bit longer than τ). As can be seen from Fig. 6a, US traffic arrives at time t20, during the sleep state S5, and a LWI/SR(Awake) bit is set and the ONU 100 transits to active state S1 and stays there to transmit all US traffic. After transmitting all US traffic, at time t21, if there is still no DS traffic, the OLT allows the ONU to transit to sleep mode again by sending SA(ON) message.

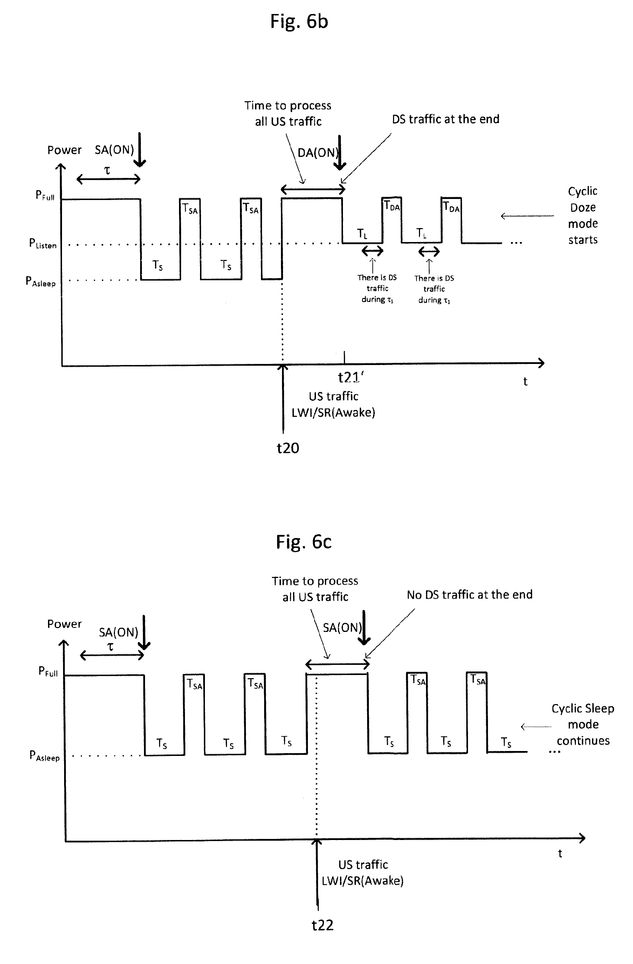

Figure 6b depicts a time diagram of an electric power consumption of an ONU 100 according to a further embodiment. Presently, US traffic arrives at time t20, during sleep state, a LWI/SR(Awake) bit may be set, and the ONU 100 transits to active state S1 (Fig. 3) and stays there to transmit all US traffic. After transmitting all US traffic and if there is DS traffic, at time t21', the OLT allows the ONU to transit to cyclic doze mode by sending a DA(ON) message.

Figure 6c depicts a time diagram of an electric power consumption of an ONU 100 according to a further embodiment. As can be seen from Fig. 6c, US traffic arrives at time t22, during the sleep aware state, a LWI/SR(Awake) bit may be set, and the ONU 100 transits to active state S1 and stays there to transmit all US traffic. After transmitting all US traffic, there is no DS traffic and then, the OLT allows the ONU to transit to Cyclic Sleep mode again by sending SA(ON) message.

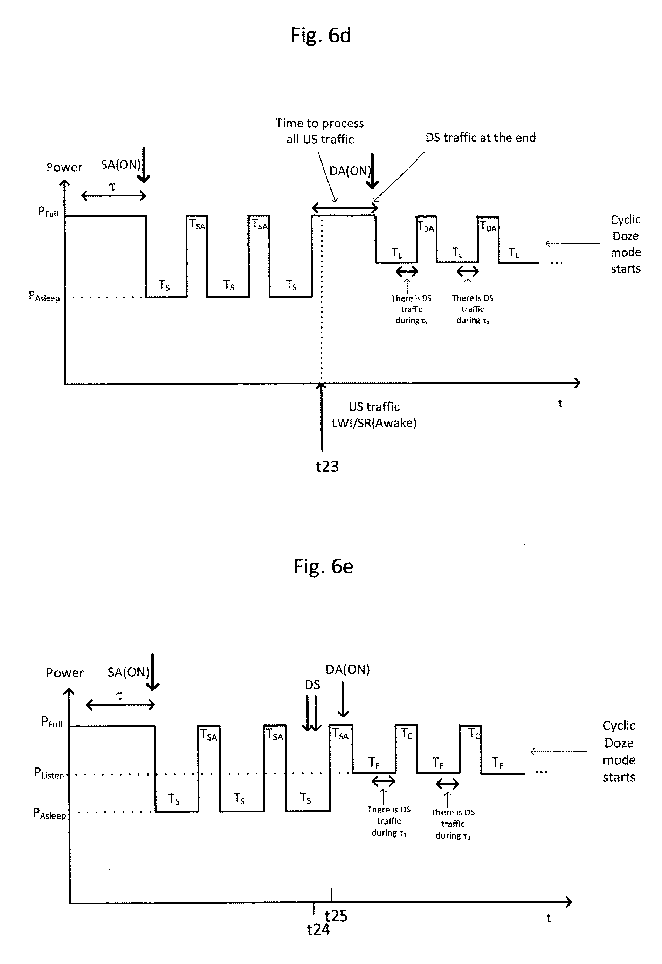

Figure 6d depicts a time diagram of an electric power consumption of an ONU 100 according to a further embodiment. As can be seen from Fig. 6d, at time t23, US traffic arrives during the sleep aware state S7 (Fig. 3), a LWI/SR(Awake) bit may be set, and the ONU 100 transits to active state S1 and stays there to transmit all US traffic. After transmitting all US traffic, there is DS traffic at the end, and the OLT 200 allows the ONU 100 to transit to cyclic doze mode by sending DA(ON) message. As can also be seen from Fig. 6d, in the cyclic doze mode, an electric power consumption of the ONU.100 is larger than in the sleep state S5, but smaller than in the active state S1.

Figure 6e depicts a time diagram of an electric power consumption of an ONU 100 according to a further embodiment. As can be seen from Fig. 6e, at time t24, DS traffic arrives during the sleep state S5. When the ONU 100 subsequently transits to sleep aware state S7, at time t25, it is notified of the DS traffic by an DA(ON) message sent from OLT 200 to ONU 100. Then, after T_Saware (abbr.: "T_{SA}" in Fig. 6e) expires, the ONU 100 transits to the doze state S6 to forward DS traffic.

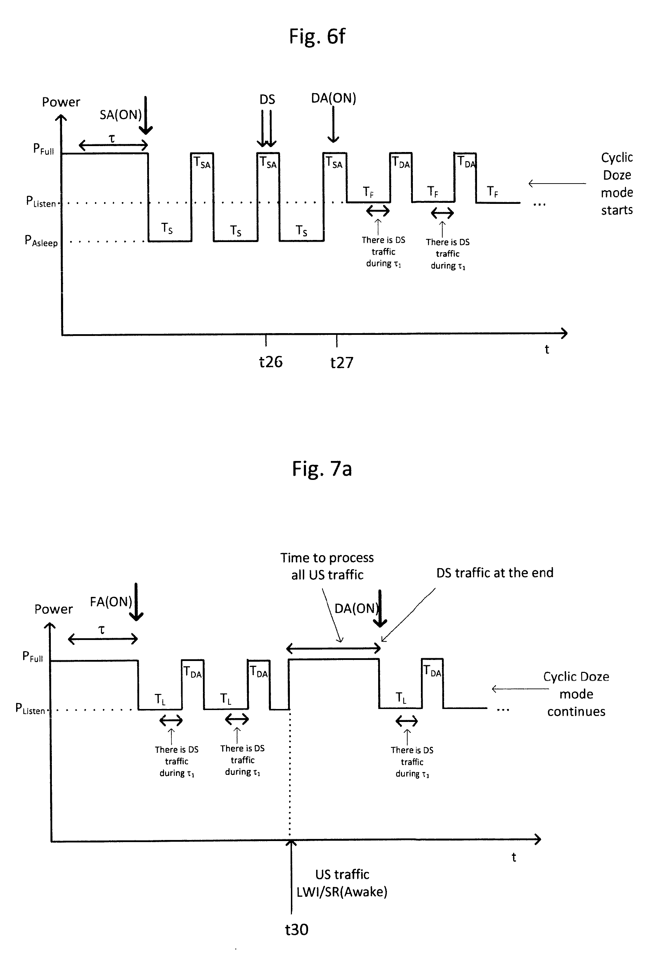

Figure 6f depicts a time diagram of an electric power consumption of an ONU 100 according to a further embodiment. As can be seen from Fig. 6f, at time t26, DS traffic arrives during the sleep aware state S7, and the ONU is notified by a DA(ON) message sent from the OLT 200 in the subsequent sleep aware state, at time t27. Then, after T_Saware expires, the ONU transits to doze state S6 to forward DS traffic.

According to a further embodiment, if there is no US during time interval τ, but DS at the end of time interval τ, the OLT allows the ONU to enter cyclic doze mode.

Figure 7a depicts a time diagram of an electric power consumption of an ONU 100 according to a further embodiment. As can be seen from Fig. 7a, at time t30, US traffic arrives during doze state S6, a LWI/SR(Awake) bit may be set, and the ONU 100 transits to active state S1 to process all US traffic. At the end of US traffic transmitting, there is DS traffic and then, the OLT allows the ONU to continues cyclic doze mode by sending DA(ON) message.

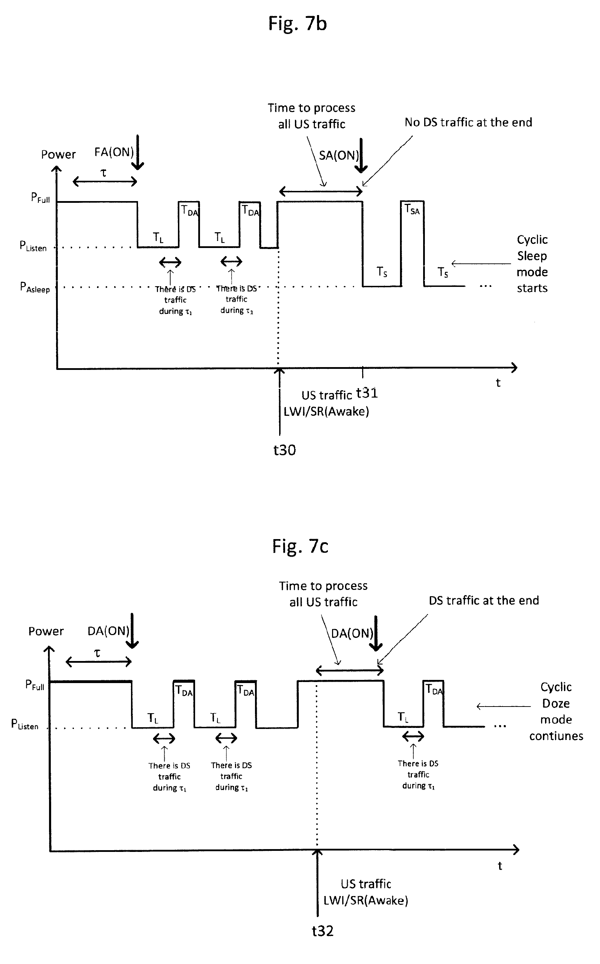

Figure 7b depicts a time diagram of an electric power consumption of an ONU 100 according to a further embodiment. As can be seen from Fig. 7b, at time t30, US traffic arrives during the doze state S6, a LWI/SR(Awake) bit may be set, and the ONU 100 transits to active state S1 to process all US traffic. At the end of US traffic transmission, there is no DS traffic and then, the OLT allows the ONU to enter cyclic sleep mode by sending SA(ON) message. The cyclic sleep mode starts at time t31 and is characterized by the ONU 100 periodically transiting from sleep state S5 to sleep aware state S7 (Fig. 3) via transition t57 and vice versa via transition t75.

Figure 7c depicts a time diagram of an electric power consumption of an ONU 100 according to a further embodiment. As can be seen from Fig. 7c, at time t32, US traffic arrives during the doze aware state, a LWI/SR(Awake) bit may be set, and the ONU 100 transits to active state to process all US traffic. At the end of US transmission, there is DS traffic and thus, the OLT allows the ONU to continue cyclic doze mode by sending a DA(ON) message.

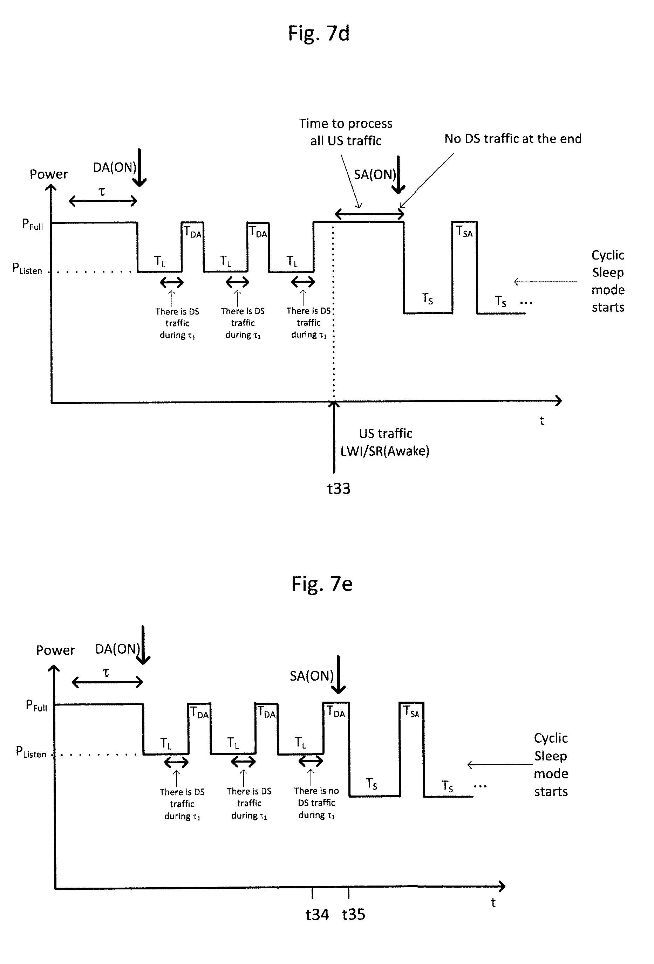

Figure 7d depicts a time diagram of an electric power consumption of an ONU 100 according to a further embodiment. As can be seen from Fig. 7d, at time t33, US traffic arrives during the doze aware state S8, the ONU 100 transits to the active state S1 to process all US traffic. At the end of US traffic transmission, there is no DS traffic and then, the OLT allows the ONU to enter cyclic sleep mode by sending SA(ON) message.

Figure 7e depicts a time diagram of an electric power consumption of an ONU 100 according to a further embodiment. As can be seen from Fig. 7e, at time t34, while the ONU 100 is in the doze state S6, there is no DS during time interval τ1, and after transition to the doze aware state S8, the ONU 100 receives SA(ON) message from OLT which allows the ONU to enter cyclic sleep mode. Then, at time t35, the ONU transits to the sleep state.

The embodiment according to Fig. 3 is particularly advantageous over existing ONU configurations in that only five states S1, S5, S6, S7, S8 are required to efficiently control the ONU's operation, including sleep state S5 and doze state S6. Moreover, the ONU 100 according to the embodiments is not required to transit numerous operational states to enter the sleep or doze states S5, S6. Rather, the ONU 100 can directly transit from the active state S1 to the sleep or doze states S5, S6. Moreover, the ONU 100 is not required to enter the active state S1 when changing from sleep state S5 to doze state S6 and vice versa.

Compared to the power management in current, conventional XG-PON standards, the present embodiments have the following advantages:
1) The principle according to the embodiments allows precise scheduling and control of the ONU sleep and awake periods by the OLT, which is particularly advantageous if multiple ONUs 100 may activate sleep mode. The principle according to the embodiments also helps to ensure a proper timing alignment (with respect to sleep and awake durations) between the OLT 200 and ONUs 100.
2) The principle according to the embodiments allows quick transits from full power states S1 to low power states S2, S3, S5, S6 eliminating intermediate steps thus leading to better power savings.
3) The principle according to the embodiments allows quick transits between low power modes S2, S3; S5, S6 which helps in reacting quickly to traffic changes and thus improves the Quality of Service (QoS).
4) The principle according to the embodiments requires fewer states in the ONU state machine and less message exchanges between the OLT and ONUs leading to lower complexity.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Optical network element (100), particularly optical network unit, ONU, (100) for a passive optical network, PON, (1000), wherein said optical network element (100) is configured to operate in a primary operational state (S1) in which said optical network element (100) can exchange optical signals with at least one further optical network element (200), particularly an optical line terminal (200) of a PON (1000), wherein said optical network element (100) is configured to operate in at least one secondary operational state (S2, S3) in which an electrical power consumption of said optical network element (100) is lower as compared to said primary operational state (S1), wherein said optical network element (100) is configured to directly transit from the primary operational state (S1) to said at least one secondary operational state (S2, S3; S5, S6).

2. Optical network element (100) according to claim 1, wherein said optical network element (100) is configured to operate in a first secondary operational state (S2; S5) in which said optical network element (100) can deactivate an optical receiver (Rx) and an optical transmitter (Tx), and a second secondary operational state (S3; S6) in which said optical receiver (Rx) is activated and in which said optical network element (100) can deactivate said optical transmitter (Tx), wherein said optical network element (100) is configured to transit from the first secondary operational state (S2; S5) to the second secondary operational state (S3; S6) and/or vice versa without transiting to the primary operational state (S1).

3. Optical network element (100) according to claim 2, wherein said optical network element (100) is configured to operate in a first ternary operational state (S4), and wherein said optical network element (100) is configured to transit from the first secondary operational state (S2) to the second secondary operational state (S3) and/or vice versa via said first ternary operational state (S4).

4. Optical network element (100) according to claim 3, wherein said optical network element (100) is configured to provide a reduced functionality within said first ternary operational state (S4) as compared to the primary operational state (S1) in order to reduce an electrical power consumption, wherein particularly a packet processor functionality is deactivated in said first ternary operational state (S4).

5. Optical network element (100) according to claim 2, wherein said optical network element (100) is configured to operate in a first ternary operational state (S7) and a second ternary operational state (S8), wherein said optical network element (100) is configured to transit from the first secondary operational state (S5) to the second secondary operational state (S6) via said first ternary operational state (S7), and/or wherein said optical network element (100) is configured to transit from the second secondary operational state (S6) to the first secondary operational state (S5) via said second ternary operational state (S8).

6. Optical network element (100) according to claim 5, wherein said optical network element (100) is configured to deactivate said optical transmitter (Tx) in said first ternary operational state (S7).

7. Optical network element (100) according to one of the preceding claims, wherein said optical network element (100) is configured to receive from a further optical network element (200), particularly from said optical line terminal (200), a command which indicates that the optical network element (100) shall transit to said at least one secondary operational state (S2, S3; S5, S6), and to transit (t12, t13; t15, t16) to said at least one secondary operational state (S2, S3; S5, S6) upon receipt of said command.

8. Method of operating an optical network element (100), particularly optical network unit, ONU, (100) for a passive optical network, PON, (1000), wherein said optical network element (100) is configured to operate in a primary operational state (S1) in which said optical network element (100) can exchange optical signals with at least one further optical network element (200), particularly an optical line terminal (200) of a PON (1000), wherein said optical network element (100) is configured to operate in at least one secondary operational state (S2, S3) in which an electrical power consumption of said optical network element (100) is lower as compared to said primary operational state (S1), wherein said optical network element (100) directly transits from the primary operational state (S1) to said at least one secondary operational state (S2, S3; S5, S6).

9. Method according to claim 8, wherein said optical network element (100) is configured to operate in a first secondary operational state (S2; S5) in which said optical network element (100) can deactivate an optical receiver (Rx) and an optical transmitter (Tx), and a second secondary operational state (S3; S6) in which said optical receiver (Rx) is activated and in which said optical network element (100) can deactivate said optical transmitter (Tx), wherein said optical network element (100) transits from the first secondary operational state (S2; S5) to the second secondary operational state (S3; S6) and/or vice versa without transiting to the primary operational state (S1).

10. Method according to claim 9, wherein said optical network element (100) is configured to operate in a first ternary operational state (S4), and wherein said optical network element (100) transits from the first secondary operational state (S2) to the second secondary operational state (S3) and/or vice versa via said first ternary operational state (S4).

11. Method according to claim 9, wherein said optical network element (100) is configured to operate in a first ternary operational state (S7) and a second ternary operational state (S8), wherein said optical network element (100) transits from the first secondary operational state (S5) to the second secondary operational state (S6) via said first ternary operational state (S4), and/or wherein said optical network element (100) transits from the second secondary operational state (S6) to the first secondary operational state (S5) via said second ternary operational state (S8).

12. Method according to claim 11, wherein said optical network element (100) deactivates said optical transmitter (Tx) in said first ternary operational state (S7).
